# EUROPEAN PATENT APPLICATION

(11) **EP 4 589 961 A1**
(43) Date of publication of application: **23.07.2025**
(21) Application number: 23864568.3
(22) Date of filing: 29.08.2023
(51) Int. Cl.: H04N 21/431

(54) **PLAYBACK CONTROL METHOD AND APPARATUS, ELECTRONIC DEVICE AND STORAGE MEDIUM**

(30) Priority: 14.09.2022 CN 202211118001
(71) Applicant: Beijing Zitiao Network Technology Co., Ltd., Beijing 100190 (CN)
(72) Inventor: WEN, Peixuan, Beijing 100028 (CN); CHE, Wanli, Beijing 100028 (CN); ZHAO, Jiarui, Beijing 100028 (CN)
(74) Representative: Dentons UK and Middle East LLP
(86) International application number: PCT/CN2023/115409
(87) International publication number: WO 2024/055836

(57) **Abstract**

A playing control method and apparatus, an electronic device, and a storage medium are provided. The method includes: playing a target video at a first playing speed in a video playing page, wherein the video playing page further displays a target page element and a first interaction control (S101); and in response to a first triggering operation on the first interaction control, playing the target video at a second playing speed in a triggering process of the first triggering operation, and cancelling the displaying of the target page element (S102).

## Description

This application claims priority to Chinese Patent Application No. 202211118001.7, filed with the China National Intellectual Property Administration on September 14, 2022, the disclosure of which is incorporated herein by reference in its entirety.

### FIELD

Embodiments of the present disclosure relate to the technical field of computers, for example, to a playing control method and apparatus, an electronic device, and a storage medium.

### BACKGROUND

In some application programs, a user may adjust a playing speed of a video on a video playing page through a certain triggering operation. However, in the related technology, during adjustment of the playing speed of the video, the video playing pages has a relatively monotonous display manner, resulting in poor user experience.

### SUMMARY

Embodiments of the present disclosure provides a playing control method and apparatus, an electronic device, and a storage medium, so as to enrich a display manner of a video playing page during adjustment of a playing speed of a video.

In a first aspect, the embodiments of the present disclosure provides a playing control method, comprising: playing a target video at a first playing speed in a video playing page, wherein the video playing page further displays a target page element and a first interaction control; and in response to a first triggering operation on the first interaction control, playing the target video at a second playing speed in a triggering process of the first triggering operation, and cancelling the displaying of the target page element.

In a second aspect, the embodiments of the present disclosure provides a playing control apparatus, comprising: a video playing module, configured to play a target video at a first playing speed in a video playing page, wherein the video playing page further displays a target page element and a first interaction control; and an element displaying cancelling module, configured to: play, in response to a first triggering operation on the first interaction control, the target video at a second playing speed in a triggering process of the first triggering operation, and cancel the displaying of the target page element.

In a third aspect, the embodiments of the present disclosure further provide an electronic device, including: at least one processor, and a memory, configured to store at least one program. When the at least one program is executed by the at least one processor, the at least one processor is caused to perform the playing control method according to the embodiments of the present disclosure.

In a fourth aspect, the embodiments of the present disclosure further provide a computer-readable storage medium, storing a computer program. The program, when executed by a processor, performs the playing control method according to the embodiments of the present disclosure.

### BRIEF DESCRIPTION OF THE DRAWINGS

FIG. 1 is a flowchart of a playing control method provided according to the embodiments of the present disclosure;
FIG. 2 is a schematic diagram of displaying of one video playing page according to the embodiments of the present disclosure;
FIG. 3 is a schematic diagram of displaying of another video playing page according to the embodiments of the present disclosure;
FIG. 4 is a schematic diagram of displaying of a further video playing page according to the embodiments of the present disclosure;
FIG. 5 is a schematic diagram of displaying of a fourth video playing page according to the embodiments of the present disclosure;
FIG. 6 is a flowchart of another playing control method provided according to the embodiments of the present disclosure;
FIG. 7 is a structural block diagram of a playing control apparatus according to the embodiments of the present disclosure; and
FIG. 8 is a schematic structural diagram of an electronic device according to the embodiments of the present disclosure.

### DETAILED DESCRIPTION OF EMBODIMENTS

The embodiments of the present disclosure will be described below with reference to the accompanying drawings. Although the accompanying drawings show some embodiments of the present disclosure, it should be appreciated that the present disclosure may be implemented in various forms, and should not be explained as being limited to the embodiments stated herein. Rather, these embodiments are provided for understanding the present disclosure more thoroughly and completely.

It should be appreciated that multiple steps recorded in method implementations of the present disclosure may be executed in different orders and/or in parallel. In addition, the method implementations may include additional steps and/or omit the execution of the steps shown.

The term "include" and its variants as used herein mean widespread inclusion, namely, "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be appreciated as "one or more".

The names of messages or information exchanged between a plurality of apparatuses in the implementations of the present disclosure are for illustrative purposes only.

It may be appreciated that before use of the technical solutions disclosed in multiple embodiments of the present disclosure, users should be informed of the type, scope of use, usage scenarios, and the like of personal information involved in the present disclosure in accordance with relevant laws and regulations in an appropriate manner, so as to obtain authorization from the users.

For example, in response to receiving an active request of a user, prompt information is sent to the user to clearly remind the user that personal information of the user needs to be involved in an operation requested to be executed. Thus, the user may independently select whether to provide the personal information to software or hardware such as an electronic device, an application program, a server, or a storage medium that performs the operation of the technical solutions of the present disclosure according to the prompt information.

As an optional but non-restrictive implementation, in response to that an active request of a user has been received, prompt information is sent to the user through, for example, a pop-up window where the prompt information may be presented in text. In addition, the pop-up window may also carry a selection control for the user to select whether to "agree" or "refuse" to provide the personal information to the electronic device.

It may be appreciated that the above notification and the above user authorization obtaining process are only illustrative and do not constitute a limitation on the implementations of the present disclosure. Other methods that meet the relevant laws and regulations may also be applied to the implementations of the present disclosure.

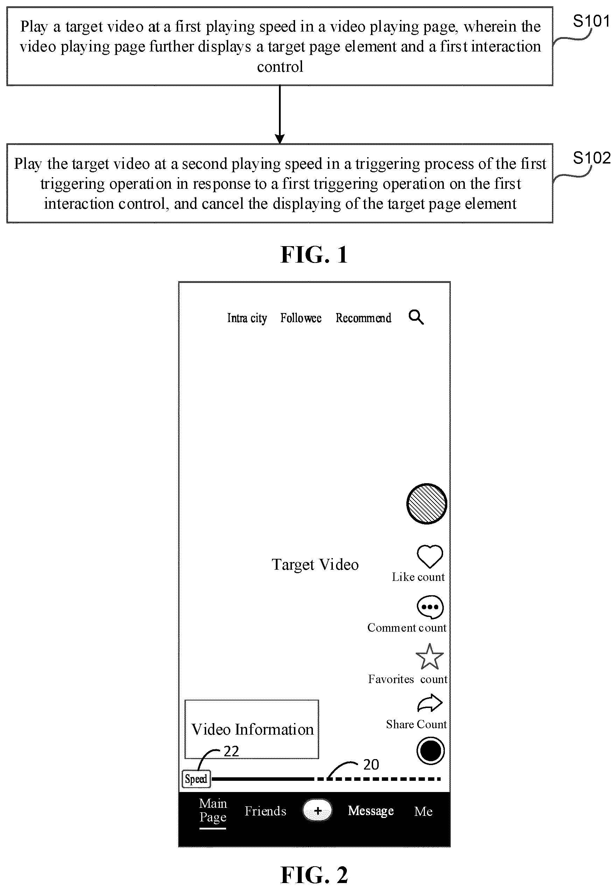

FIG. 1 is a flowchart of a playing control method provided according to the embodiments of the present disclosure. The method may be performed by a playing control apparatus. The apparatus may be implemented by software and/or hardware and may be configured in an electronic device, for example, in a mobile phone or a tablet. The playing control method provided by the embodiments of the present disclosure is applicable to a scenario of adjusting a playing speed of the video in a process of watching a video. As shown in FIG. 1, the playing control method provided in this embodiment may include the following steps.

S101. a target video is played at a first playing speed in a video playing page, wherein the video playing page further displays a target page element and a first interaction control.

The video playing page may be a page used for playing videos. The target video may be a video currently being played on the video playing page, and may include, but not be limited to, a short video. This embodiment does not limit a duration and/or type of the target video. For example, the target video may be any video or a video that meets preset conditions, such as a video having a duration reaching a preset duration threshold (for example, 60 s).

The first playing speed may be a playing speed of the target video at current time, such as 1x speed (which is a normal playing speed of the video), 1.5x speed (which is 1.5 times the normal playing speed of the video), 2x speed (which is twice the normal playing speed of the video), 0.5x speed (which is 0.5 times the normal playing speed of the video), or the like. The first interaction control may be a control configured to trigger the adjustment of the playing speed of the target video, for example, a progress control or speed adjustment control of the target video.

The target page element may be another page element displayed on the video playing page, except for the control configured to trigger the adjustment of the playing speed of the target video. Optionally, the target page element includes at least one of: at least one page identifier, a second interaction control corresponding to the target video, and video information of the target video.

The page identifier may be appreciated as an identifier of a page, which may be used for triggering a display of a corresponding page. The page identifier may include, for example, a homepage identifier corresponding to a homepage of an application program, a contact page identifier corresponding to a contact page, a captured page identifier corresponding to a captured page, a message page identifier corresponding to a message page, a personal page identifier corresponding to a personal page of a current user, a recommended video playing page identifier corresponding to a recommended video playing page (for example, a page used for playing a recommended video), a followee page identifier corresponding to a followee's video playing page (for example, a page used for playing videos posted by another user followed by the current user), a local page identifier corresponding to a local video playing page (for example, a page used for playing videos posted in a city where the current user is located/configured), a search page identifier corresponding to a search page, a live streaming page identifier corresponding to a live streaming page, and the like. In addition, when the video playing page displays video comment subtitles and/or video comments, the target page element may further include the video comment subtitles and/or video comments of the target video. It may be appreciated that the city where the current user is located and a city where a video is posted are both acquired with the full authorization of the current user and a video poster.

The second interaction control may be an interaction control which is configured to perform an interaction operation associated with the target video and is different from the first interaction control, such as, a likes control, a comments control, a favorites control, a share control, a music control configured to trigger the viewing of audio information of the target video (for example, background music information), a personal page control configured to trigger the viewing of a personal page of a poster of the target video, and/or a following control configured to trigger the following of the poster of the target video, and the like of the target video.

The video information of the target video may be related information of the target video, such as, a username of the poster of the target video, introduction information of the target video, and/or post time information of the target video.

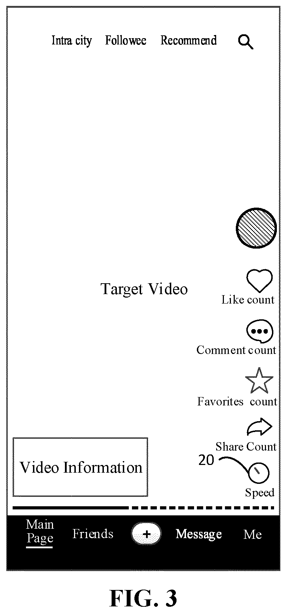

The target video may be played at the first playing speed on the video playing page, and the target page element and a first interaction control 20 corresponding to the target video may be displayed in the video playing page. For example, at least one page identifier, the second interaction control corresponding to the target video, the video information of the target video, and the first interaction control 20 may be displayed in the video playing page, as shown in FIG. 2 and FIG. 3.

S102. the target video is played, in response to a first triggering operation on the first interaction control, at a second playing speed in a triggering process of the first triggering operation, and the displaying of the target page element is cancelled.

The first triggering operation may be a triggering operation applied on the first interaction control. A triggering operation applied on an interaction control (for example, the first interaction control) may be a triggering operation applied on a display position of the interaction control, or a triggering operation applied on an associated region of the interaction control. The associated region may be a hot region of the interaction control, and the interaction control may be displayed in the associated region. That is, optionally, the first triggering operation is applied on a preset associated region where the first interaction control is located. The triggering operation on the first interaction control may be, for example, a long press operation or a continuous click operation on the first interaction control. This embodiment does not limit an operation type of the first triggering operation. The second playing speed may be a preset playing speed. The playing speed may be greater than, equal to, or less than the normal playing speed of the target video. The playing speed may be optionally greater than the normal playing speed of the target video and/or a current first playing speed of the target video. For example, the second playing speed may be set to be a 2x speed or a 3x speed to facilitate quickly watching the target video for the user.

When the triggering operation on the first interaction control has been detected, the target video may be played at the second playing speed in the triggering process, and the displaying of the target page element displayed in the video playing page is cancelled.

When the target video is played at the second playing speed, exemplarily, if the first playing speed of the target video before the first triggering operation is received is different from the preset second playing speed, the current playing speed of the target video may be switched from the first playing speed to the second playing speed. If the first playing speed of the target video is the same as the preset second playing speed before the first triggering operation is received, the target video may continue to be played at the first playing speed (namely, the second playing speed) in response to the triggering operation, or, a user may be prompted that the current playing speed of the target video is the second playing speed without making a response to the triggering operation.

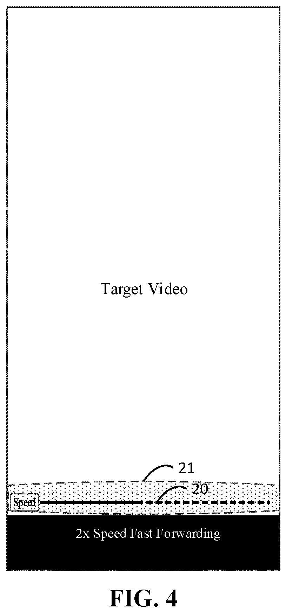

By way of example, the first triggering operation is a long press operation, and the second playing speed is a 2x speed. In some implementations, as shown in FIG. 2, the first interaction control 20 may be a progress control of the target video, such as a progress bar of the target video. Therefore, when the long press operation on the progress control of the target video has been detected, the target video may be played at the 2x speed, and displaying of the target page element is cancelled. For example, displaying of a plurality of page identifiers in the video playing page, the second interaction control corresponding to the target video, and the video information of the target video is cancelled, as shown in FIG. 4.

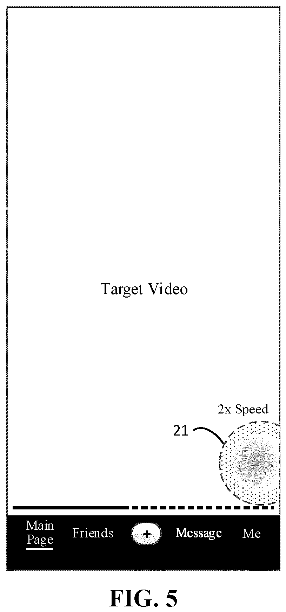

By way of example, the first triggering operation is a long press operation, and the second playing speed is a 2x speed. In some other implementations, as shown in FIG. 3, when the target video is played, a speed adjustment control may be displayed in the video playing page and used as the first interaction control 20. Therefore, when the long press operation on the speed adjustment control displayed in the video playing page has been detected, the target video may be played at the 2x speed, and the displaying of the target page element is cancelled. For example, displaying of a plurality of page identifiers displayed in a video playing region of the video playing page, the second interaction control corresponding to the target video, and the video information of the target video is cancelled, as shown in FIG. 5.

In this embodiment, when the first triggering operation is performed in different ways, for example, when the first interaction control is a different control, the target page element that is cancelled to be displayed in response to the first triggering operation may be the same or different, which may be set as needed. In addition, when the target video is played at the second playing speed in response to the first triggering operation, speed information of the second playing speed may also be displayed on the video playing page to prompt a user of the current playing speed of the target video. When the first triggering operation has been received, a current application terminal installed with a current application program may be controlled to vibrate to prompt the user.

According to the playing control method provided in this embodiment, the target video is played at the first playing speed in the video playing page, wherein the video playing page further displays the target page element and the first interaction control; and the target video is played, in response to the first triggering operation on the first interaction control, at the second playing speed in the triggering process of the first triggering operation, and the displaying of the target page element is cancelled. By the adoption of the above technical solutions, cancelling the displaying of at least part of the page element in the video playing page while adjusting the playing speed of the video in response to the corresponding triggering operation of the user may enrich the display manner of the video playing page during the adjustment of the playing speed of the video and improve the conciseness of the displayed element in the video playing page during the adjustment of the playing speed of the video, which avoids excessive obstruction on video pictures by the element displayed in the video playing page or excessive interference with user watching video pictures. The user experience is improved.

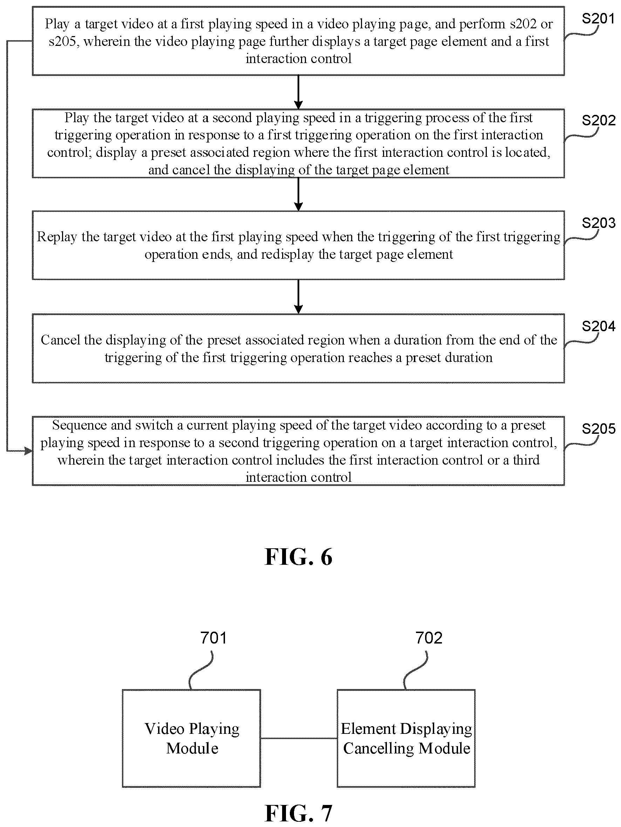

FIG. 6 is a flowchart of another playing control method provided according to the embodiments of the present disclosure. The scheme in this embodiment may be combined with one or more optional schemes in the above embodiments. Optionally, the playing control method provided by this embodiment further includes: replaying the target video at the first playing speed in a case that triggering of the first triggering operation ends, and redisplaying the target page element.

Optionally, the first triggering operation is applied on a preset associated region where the first interaction control is located. The playing control method provided in this embodiment further includes: playing the preset associated region where the first interaction control is located in the triggering process of the first triggering operation.

Optionally, the playing control method provided by this embodiment further includes: cancelling displaying of the preset associated region when a duration from the end of the triggering of the first triggering operation reaches a preset duration.

Optionally, the playing control method provided by this embodiment further includes: switching a current playing speed of the target video in response to a second triggering operation on a target interaction control, according to a preset playing speed sequence, wherein the target interaction control includes the first interaction control or a third interaction control.

As shown in FIG. 6, the playing control method provided in this embodiment may include the following steps.

S201, a target video is played at a first playing speed in a video playing page, and S202 or S205 is executed, wherein the video playing page further displays a target page element and a first interaction control.

S202, the target video is played, in response to a first triggering operation on the first interaction control, at a second playing speed in a triggering process of the first triggering operation; a preset associated region where the first interaction control is located is displayed, and the displaying of the target page element is cancelled, wherein the first triggering operation is applied on the preset associated region where the first interaction control is located.

In this embodiment, in the triggering process of the first triggering operation, the target video may be played at the second playing speed; the preset associated region 21 where the first interaction control 20 is located is displayed (for example, the preset associated region 21 where the first interaction control 20 is located is highlighted); and the displaying of the target page element in the video playing page is stopped, as shown in FIG. 4 and FIG. 5.

In an embodiment, if the preset associated region of the first interaction control is displayed, the preset associated region of the first interaction control may be displayed in a static manner, or the preset associated region of the first interaction control may be displayed in a dynamic manner. For example, a preset shape is displayed at a preset display position; the preset shape is controlled to be gradually enlarge; and the displaying of the preset shape is stopped when the preset shape is gradually enlarged to a boundary position of the first preset region. Furthermore, before, while, or after the preset shape moves to the boundary position of the preset associated region, a new preset shape is displayed at the preset display position, and the new preset shape is controlled to repeat the above operations, that is, the preset associated region of the first interaction control is dynamically displayed in a way that one or more concentric preset shapes gradually spread outwards. The preset display position may be a center position of the preset associated region of the first interaction control, a display position of the first interaction control before the first triggering operation is received, or another position within the preset associated region of the first interaction control. The preset shape may be a circle, an ellipse, or another regular or irregular shape.

In an optional implementation, if the first interaction control includes a progress control of the target video, the preset associated region of the progress control may be displayed in the static manner. If the first interaction control includes a speed adjustment control, the preset associated region of the speed adjustment control may be displayed in a dynamic manner. For example, the preset associated region of the speed adjustment control is dynamically displayed in a way that concentric circles gradually spread outwards.

S203, the target video is replayed at the first playing speed when the triggering of the first triggering operation ends, and the target page element is redisplayed.

In this embodiment, when the triggering of the first triggering operation ends, the target video may be played at the first playing speed of the target video again before the first triggering operation is received, and the displaying of the target page element is restored.

By way of example, the first triggering operation is a long press operation. When it is detected that a user stops executing the long press operation on the first interaction control, a current playing speed of the target video may be switched from the second playing speed to the first playing speed, and the target page element in the video playing page may be redisplayed.

It may be appreciated that this embodiment may also preset a preset playing speed (such as a 1x speed) different from the second playing speed. In this way, when the triggering of the first triggering operation ends, the target video may be played at the preset playing speed instead of the first playing speed. That is, when the triggering of the first triggering operation ends, the current playing speed of the target video may be switched from the second playing speed to the preset playing speed, and the target page element is redisplayed.

In addition, in the performing process of the first triggering operation, a display style of the progress control of the target video may also be adjusted. For example, the display style is switched from a first display style before the first triggering operation is received to a second display style; and/or, the displaying of the first interaction control is maintained/cancelled. In this way, when the triggering of the first triggering operation ends, the second display style may also be switched to the first display style; and/or, the displaying the first interaction control is maintained/the first interaction control is redisplayed. The first display style and the second display style may have different colors, brightness, display sizes, and/or the like.

S204, the displaying of the preset associated region is cancelled when a duration from the end of the triggering of the first triggering operation reaches a preset duration.

In this embodiment, when the duration from the end of the triggering of the first triggering operation reaches the preset duration, for example, at the preset duration after the end of the triggering of the first triggering operation, the displaying of the preset associated region of the first interaction control may be stopped. For example, the highlighting of the preset associated region of the first interaction control is stopped, so as to facilitate a user to watch other elements displayed in the video playing page. The preset duration may be set as needed. For example, the preset duration may be set to be Os, which means that the displaying of the preset associated region of the first interaction control may be cancelled at the end of the triggering of the first triggering operation, or, the preset duration may also be set to be greater than Os.

S205, a current playing speed of the target video is sequenced and switched, in response to a second triggering operation on a target interaction control, according to a preset playing speed, wherein the target interaction control includes the first interaction control or a third interaction control.

The second triggering operation may be a triggering operation on the target interaction control, such as a clicking operation on the target interaction control. The target interaction control may include the first interaction control or the third interaction control, which means that the first interaction control may be configured to allow a user to perform the first triggering operation and the second triggering operation. Or, the first interaction control may be configured to allow the user to perform the first triggering operation instead of the second triggering operation. In this case, the third interaction control different from the first interaction control may be configured in the video playing page, such as a speed switching control, to allow the user to perform the second triggering operation. For example, when the first interaction control is not the progress control of the target video, for example, when the first interaction control is the speed adjustment control, the first interaction control may be configured to allow a user to perform the first triggering operation and the second triggering operation. When the first interaction control is the progress control of the target video, the first interaction control may be configured to allow the user to perform the first triggering operation instead of the second triggering operation. In addition, the target interaction control may also display current playing speed information of the target video, so that the user may determine the current playing speed of the target video.

When the second triggering operation is applied on the first interaction control, the first triggering operation and the second triggering operation may be different types of triggering operations. For example, the first triggering operation may be a long press operation, and the second triggering operation may be a click operation. When the second triggering operation is not applied on the first interaction control, for example, when the second triggering operation is applied on the third interaction control, the first triggering operation and the second triggering operation may be the same type or different types of triggering operations.

The preset playing speed sequence may be a preset order of different playing speeds. The preset playing speed sequence may include a plurality of playing speed identifiers corresponding to different playing speeds, and the plurality of playing speed identifiers may be arranged in a certain order.

When the second triggering operation on the target interaction control has been received, the current playing speed of the target video may be switched according to the preset playing speed sequence. By way of example, a plurality of playing speeds are switched from front to back in the preset playing speed sequence. The current playing speed of the target video may be switched to a playing speed, adjacent to and located behind the current playing speed of the target video before the switching, in the preset playing speed sequence (for a case where the current playing speed of the target video before the switching is not the last playing speed in the preset playing speed sequence), or, the current playing speed of the target video is switched to the first playing speed in the preset playing speed sequence (for a case where the current playing speed of the target video before the switching is the last playing speed in the preset playing speed sequence).

It may be appreciated that the second triggering operation may only be used for indicating switching of the playing speed of the target video, or indicating switching of a playing speed of each video played in the video playing page or the current application program. When a user initiates the current application program, a video may be played at a playing speed of a video in the video playing page before the current application program is closed, or at a preset playing speed (such as a 1x speed).

In some implementations, as shown in FIG. 2, the target interaction control may be a third interaction control 22. In this way, when the second triggering operation on the third interaction control 22 has been detected, the current playing speed of the target video may be switched according to the preset playing speed sequence.

In some other implementations, as shown in FIG. 3, the target interaction control may be a first interaction control 20. In this way, when the second triggering operation on the first interaction control 20 has been detected, the current playing speed of the target video may be switched according to the preset playing speed sequence.

In this embodiment, the user may set whether to display in the video playing page according to the needs, the target interaction control for the user to perform the second triggering operation. In this way, optionally, the playing control method provided by this embodiment further includes: stopping the displaying of the target interaction control in the video playing page in response to a display cancelling operation on the target interaction control; and/or, the target interaction control is displayed in the video playing page in response to a control display operation on the target interaction control.

The display cancelling operation may be a triggering operation used for indicating cancellation of the displaying of the target interaction control. The control display operation may be a triggering operation used for indicating displaying of the target interaction control in the video playing page.

When the target interaction control is displayed in the video playing page, the user may instruct the current application program to stop displaying the target interaction control by performing the display cancelling operation. Thus, when the current application program has received the display cancelling operation performed by the user on the target interaction control, the current application program may stop displaying the target interaction control in the video playing page, for example, directly cancelling the displaying of the target interaction control or switching the target interaction control to another control (such as a music control).

When no target interaction control is displayed in the video playing page, the user may instruct the current application program to display the target interaction control by performing the control display operation. Thus, when the current application program has received the control display operation performed by the user on the target interaction control, the current application program may display the target interaction control in the video playing page, for example, additionally displaying the target interaction control in the video playing page or switching a control (such as a music control) displayed in the video playing page to the target interaction control.

It should be noted that the display cancelling operation/control display operation on the target interaction control performed by the user may only be used for indicating not displaying/displaying the target interaction control when the target video is played and/or in the video playing page, or indicating not displaying the target interaction control in a plurality of video playing pages of the current application program. When the user initiates the current application program, the target interaction control may be displayed/not be displayed according to a preset display policy. Alternatively, the target interaction control may be maintained not displayed/displayed according to a state of a target application program when the current application program is last closed.

In some implementations, the playing control method provided by this embodiment further includes: displaying a preset panel of the target video in response to a panel display operation applied on the video playing page, wherein the preset panel displays a fourth interaction control, or the preset panel displays a fifth interaction control; the fifth interaction control is configured to trigger a displaying of the fourth interaction control; and the fourth interaction control is configured to trigger a performing of the display cancelling operation or configured to trigger a performing of the control display operation.

In the above implementation, the display cancelling operation/control display operation applied on the target interaction control may be applied on the fourth interaction control, and the fourth interaction control may be displayed in the preset panel or displayed in response to a triggering operation on a corresponding interaction control (for example, the fifth interaction control) in the preset panel. Thus, when the target interaction control is displayed in the video playing page, the user may perform the display cancelling operation on the target interaction control by triggering the fourth interaction control. When no target interaction control displayed in the video playing page, the user may perform the control display operation on the target interaction control by triggering the fourth interaction control.

The preset panel may be a panel that is preset and is configured to display the fourth interaction control and/or the fifth interaction control, such as a long press panel that achieves displaying in response to a long press operation performed by the user on a non-control region in the video playing page. The fourth interaction control may be an interaction control configured to trigger a performing of the display cancelling operation/control display operation on the target interaction control. The fifth interaction control may be an interaction control configured to trigger a display of the fourth interaction control.

Exemplarily, the current application program may directly display the fourth interaction control and/or a plurality of multiplied speed controls in the preset panel, or may display the fifth interaction control in the preset panel, and display the fourth interaction control and/or a plurality of multiplied speed controls when a triggering operation applied on the fifth interaction control has been detected, for example, display the fourth interaction control and/or the plurality of multiplied speed controls in the preset panel or in another window (such as a pull-down list). Thus, the user may perform the display cancelling operation/control display operation on the target interaction control by triggering the fourth interaction control; and/or, the user may switch, by triggering a multiplied speed control, a current playing speed of a currently played video (for example, the target video) in the video playing page to a playing speed corresponding to the multiplied speed control triggered by the user. Playing speeds corresponding to different multiplied speed controls may vary here.

The playing control method provided in this embodiment may further enrich the manner for adjusting a video playing speed and the display manner of the video playing page during the adjustment of the video playing speed, thereby further improving the user experience.

FIG. 7 is a structural block diagram of a playing control apparatus according to the embodiments of the present disclosure. The apparatus may be implemented by software and/or hardware and may be configured in an electronic device, for example, a mobile phone or a tablet. A playing speed of a video may be adjusted by implementing the playing control method. As shown in FIG. 7, the playing control apparatus provided by this embodiment may include a video playing module 701 and an element displaying cancelling module 702. The video playing module 701 is configured to play a target video at a first playing speed in a video playing page, wherein the video playing page further displays a target page element and a first interaction control; and the element displaying cancelling module 702 is configured to: play, in response to a first triggering operation on the first interaction control, the target video at a second playing speed in a triggering process of the first triggering operation, and cancel the displaying of the target page element.

According to the playing control method provided in this embodiment, the target video is played at the first playing speed in the video playing page through the video playing module, wherein the video playing page further displays the target page element and the first interaction control; and through the element displaying cancelling module, the target video is played, in response to the first triggering operation on the first interaction control, at the second playing speed in the triggering process of the first triggering operation, and the displaying of the target page element is cancelled. By the adoption of the above technical solutions, cancelling the displaying of at least part of the page element in the video playing page while adjusting the playing speed of the video in response to the corresponding triggering operation of the user may enrich the display manner of the video playing page during the adjustment of the playing speed of the video and improve the conciseness of the displayed element in the video playing page during the adjustment of the playing speed of the video, which avoids excessive obstruction on video pictures by the element displayed in the video playing page or excessive interference with user watching video pictures. The user experience is improved.

The playing control apparatus provided by this embodiment may further include: a redisplaying module configured to: replay the target video at the first playing speed when the triggering of the first triggering operation ends, and redisplay the target page element.

In the above scheme, the first triggering operation may be applied on a preset associated region where the first interaction control is located. The playing control apparatus provided in this embodiment may further include: a region display module, configured to display, in the triggering process of the first triggering operation, the preset associated region where the first interaction control is located.

The playing control apparatus provided by this embodiment may further include: a regional display cancelling module, configured to cancel the displaying of the preset associated region when a duration from the end of the triggering of the first triggering operation reaches a preset duration.

The playing control apparatus provided by this embodiment may further include: a speed switching module, configured to switch, in response to a second triggering operation on a target interaction control, a current playing speed of the target video according to a preset playing speed sequence, wherein the target interaction control includes the first interaction control or a third interaction control.

The playing control apparatus provided by this embodiment may further include: a control display cancelling module, configured to stop the displaying of the target interaction control in the video playing page in response to a display cancelling operation on the target interaction control; and/or, a control display module, configured to display the target interaction control in the video playing page in response to a control display operation on the target interaction control.

The playing control apparatus provided by this embodiment may further include: a panel display module, configured to display a preset panel of the target video in response to a panel display operation applied on the video playing page, wherein the preset panel displays a fourth interaction control, or the preset panel displays a fifth interaction control; the fifth interaction control is configured to trigger a display of the fourth interaction control; and the fourth interaction control is configured to trigger a performing of the display cancelling operation or configured to trigger a performing of the control display operation.

The playing control apparatus provided by the embodiments of the present disclosure may perform the playing control method provided by any embodiment of the present disclosure, and has the corresponding functional modules for performing the playing control method. For technical details not described in this embodiment, refer to the playing control method provided in any embodiment of the present disclosure.

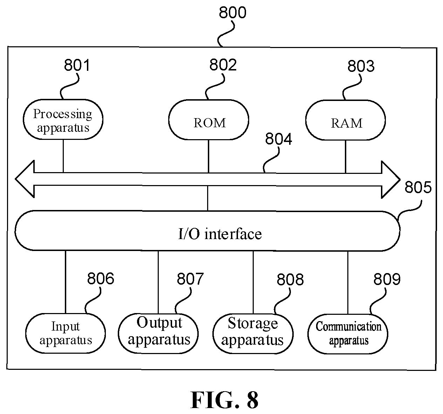

FIG. 8 is a schematic structural diagram of an electronic device (for example, a terminal device) 800 applicable to implementing the embodiments of the present disclosure below. The terminal device in the embodiments of the present disclosure may include, but are not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 8 is only an example and should not impose any limitations on the functionality and scope of use of the embodiments of the present disclosure.

As shown in FIG. 8, the electronic device 800 may include a processing apparatus (such as a central processing unit and graphics processor) 801 that may perform various appropriate actions and processing according to programs stored in a Read-Only Memory (ROM) 802 or loaded from a storage apparatus 808 to a Random Access Memory (RAM) 803. Various programs and data required for operations of the electronic device 800 may also be stored in the RAM 803. The processing apparatus 801, the ROM 802, and the RAM 803 are connected to each other through a bus 804. An Input/Output (I/O) interface 805 is also connected to a bus 804.

Usually, following apparatuses may be connected to the I/O interface 805: an input apparatus 806 including a touch screen, a touchpad, a keyboard, a mouse, a camera, a microphone, an accelerometer, a gyroscope, and the like; an output apparatus 807 including a Liquid Crystal Display (LCD), a speaker, a vibrator, and the like; a storage apparatus 808 including a magnetic tape, a hard disk drive, and the like; and a communication apparatus 809. The communication apparatus 809 may allow the electronic device 800 to wirelessly or wiredly communicate with other devices to exchange data. Although FIG. 8 shows the electronic device 800 with multiple apparatuses, it should be appreciated that the electronic device 800 is not required to implement or have all the apparatuses shown, and may alternatively implement or have more or fewer apparatuses.

According to the embodiments of the present disclosure, the process described in the reference flowchart above may be implemented as a computer software program. For example, the embodiments of the present disclosure include a computer program product, including a computer program carried on a nontransitory computer-readable medium, and the computer program includes program codes used for performing the methods shown in the flowcharts. In such an embodiment, the computer program may be downloaded and installed from a network through the communication apparatus 809, or installed from the storage apparatus 808, or installed from the ROM 802. When the computer program is executed by the processing apparatus 801, the above-mentioned functions defined in the methods of the embodiments of the present disclosure are executed.

It should be noted that the computer-readable medium mentioned in the present disclosure may be a computer-readable signal medium, a computer-readable storage medium, or any combination of the computer-readable signal medium and the computer-readable storage medium. The computer-readable storage medium may be, for example, but not limited to, electric, magnetic, optical, electromagnetic, infrared, or semiconductor systems, apparatuses, or devices, or any combination of the above. Examples of the computer-readable storage medium may include but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus, or device. In the present disclosure, the computer-readable signal media may include data signals propagated in a baseband or as part of a carrier wave, which carries computer-readable program codes. The propagated data signals may be in various forms, including but not limited to: electromagnetic signals, optical signals, or any suitable combination of the above. The computer-readable signal medium may also be any computer-readable medium other than a computer-readable storage medium. The computer-readable signal medium may send, propagate, or transmit programs for use by or in combination with an instruction execution system, apparatus, or device. The program codes contained in the computer-readable medium may be transmitted using any suitable medium, including but not limited to: a wire, an optical cable, a Radio Frequency (RF), and the like, or any suitable combination of the above.

In some implementations, clients and servers may communicate using any currently known or future developed network protocol such as a HyperText Transfer Protocol (HTTP), and may intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. When the above one or more programs are executed by the electronic device, the electronic device is caused to: play a target video at a first playing speed in a video playing page, wherein the video playing page further displays a target page element and a first interaction control; and play, in response to a first triggering operation applied on the first interaction control, the target video at a second playing speed in a triggering process of the first triggering operation, and cancel the displaying of the target page element.

Computer program codes for performing the operations of the present disclosure may be written in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer may be connected to a user computer through any kind of networks, including a LAN or a WAN, or may be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure may be implemented through software or hardware. The name of a module does not constitute a limitation on the unit itself in one case.

The functions described herein above may be performed, at least in part, by one or a plurality of hardware logic components. For example, nonrestrictively, example hardware logic components that may be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

According to one or more embodiments of the present disclosure, Example 1 provides a playing control method, including: playing a target video at a first playing speed in a video playing page, wherein the video playing page further displays a target page element and a first interaction control; and playing, in response to a first triggering operation applied on the first interaction control, the target video at a second playing speed in a triggering process of the first triggering operation, and cancelling the displaying of the target page element.

According to one or more embodiments of the present disclosure, in Example 2, the playing control method according to Example 1 further includes: playing the target video at the first playing speed again in a case that the triggering of the first triggering operation ends, and redisplaying the target page element.

According to one or more embodiments of the present disclosure, in Example 3, in the playing control method according to Example 1, the first triggering operation is applied on a preset associated region where the first interaction control is located. The method further includes: displaying, in the triggering process of the first triggering operation, the preset associated region where the first interaction control is located.

According to one or more embodiments of the present disclosure, in Example 4, the playing control method according to Example 3 further includes: cancelling displaying of the preset associated region when a duration from the end of the triggering of the first triggering operation reaches a preset duration.

According to one or more embodiments of the present disclosure, in Example 5, the playing control method according to any one of Examples 1 to 4 further includes: switching, in response to a second triggering operation applied on a target interaction control, a current playing speed of the target video according to a preset playing speed sequence, wherein the target interaction control includes the first interaction control or a third interaction control.

According to one or more embodiments of the present disclosure, in Example 6, the playing control method according to Example 5 further includes: stopping the displaying of the target interaction control in the video playing page in response to a display cancelling operation applied on the target interaction control; and/or, displaying the target interaction control in the video playing page in response to a control display operation applied on the target interaction control.

According to one or more embodiments of the present disclosure, in Example 7, the playing control method according to Example 6 further includes: displaying a preset panel of the target video in response to a panel display operation applied on the video playing page, wherein the preset panel displays a fourth interaction control, or the preset panel displays a fifth interaction control; the fifth interaction control is configured to trigger a display of the fourth interaction control; and the fourth interaction control is configured to trigger a performing of the display cancelling operation or configured to trigger a performing the control display operation.

According to one or more embodiments of the present disclosure, Example 8 provides a playing control apparatus, including: a video playing module, configured to play a target video at a first playing speed in a video playing page, wherein the video playing page further displays a target page element and a first interaction control; and an element displaying cancelling module, configured to: play, in response to a first triggering operation applied on the first interaction control, the target video at a second playing speed in a triggering process of the first triggering operation, and cancel the displaying of the target page element.

According to one or more embodiments of the present disclosure, Example 9 provides an electronic device, including: one or more processors; and a memory, configured to store one or more programs, wherein when the one or more programs are executed by the one or more processors, the one or more processors are caused to perform the playing control method according to any one of Examples 1 to 7.

According to one or more embodiments of the present disclosure, Example 10 provides a computer-readable storage medium, storing a computer program. The program, when executed by a processor, performs the playing control method according to any one of Examples 1 to 7.

The above description is only for explaining the embodiments of the present disclosure and technical principles used in the embodiments. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, for example, a technical solution formed by replacing the above features with (but not limited to) technical features with similar functions disclosed in the present disclosure.

In addition, although operations are depicted in a specific order, this should not be appreciated as requiring these operations to be executed in the specific order shown or in a sequential order. In certain environments, multitasking and parallel processing may be advantageous. As such, the above discussion includes multiple implementation details. Some features described in the context of individual embodiments may also be combined and implemented in a single embodiment. Conversely, various features that are described in the context of a single embodiment may also be implemented in multiple embodiments separately or in any suitable sub-combination.

## Claims

1. A playing control method, comprising:
playing a target video at a first playing speed in a video playing page, wherein the video playing page further displays a target page element and a first interaction control;
in response to a first triggering operation on the first interaction control, playing the target video at a second playing speed in a triggering process of the first triggering operation, and cancelling display of the target page element.

2. The method according to claim 1, further comprising:
replaying the target video at the first playing speed in a case that triggering of the first triggering operation ends, and redisplaying the target page element.

3. The method according to claim 1, wherein the first triggering operation applied within a preset associated region where the first interaction control is located, and the method further comprises:
in the triggering process of the first triggering operation, displaying the preset associated region where the first interaction control is located.

4. The method according to claim 3, further comprising:
cancelling the displaying of the preset associated region in a case that a duration from the end of triggering of the first triggering operation reaches a preset duration.

5. The method according to any one of claims 1 to 4, further comprising:
in response to a second triggering operation on a target interaction control, switching a current playing speed of the target video according to a preset playing speed sequence, wherein the target interaction control comprises the first interaction control or a third interaction control.

6. The method according to claim 5, further comprising at least one of the following:
in response to a display cancelling operation on the target interaction control, stopping the displaying of the target interaction control in the video playing page; and
in response to a control display operation on the target interaction control, displaying the target interaction control in the video playing page.

7. The method according to claim 6, further comprising:
in response to a panel display operation applied on the video playing page, displaying a preset panel of the target video, wherein a fourth interaction control is displayed in the preset panel, or a fifth interaction control is displayed in the preset panel, the fifth interaction control is configured to trigger a display of the fourth interaction control; and the fourth interaction control is configured to trigger a performing of the display cancelling operation or configured to trigger a performing of the control display operation.

8. A playing control apparatus, comprising:
a video playing module, configured to play a target video at a first playing speed in a video playing page, wherein the video playing page further displays a target page element and a first interaction control;
an element playing cancelling module, configured to play, in response to a first triggering operation on the first interaction control, the target video at a second playing speed in a triggering process of the first triggering operation, and cancel the displaying of the target page element.

9. An electronic device, comprising:
at least one processor; and
a memory, which is in communication connection with the at least one processor,
wherein the memory stores a computer program executed by the at least one processor, and the computer program, run by the at least one processor, causes the at least one processor to implement the playing control method according to any one of claims 1 to 7.

10. A computer-readable storage medium, storing computer-executable instructions, wherein the computer-executable instructions are used for implementing, when executed by a processor, the playing control method according to any one of claims 1 to 7.
